# DEMANDE DE BREVET EUROPEEN

(11) **EP 2 058 488 A1**
(43) Date de publication de la demande: **13.05.2009**
(21) Numéro de dépôt: 08168382.3
(22) Date de dépôt: 05.11.2008
(51) Int. Cl.: F02C 6/00

(54) **Turbomoteur comportant des moyens pour chauffer l'air entrant dans la turbine libre**

(30) Priorité: 07.11.2007 FR 0758841
(71) Demandeur: Turbomeca, 64510 Bordes (FR)
(72) Inventeur: Dauriac, Pascal, 64110 Rontignon (FR); Pons, Bernard, 64510 Assat (FR); Py, Jean-Michel, 64800 Pardies Pietat (FR)
(74) Mandataire: Balesta, Pierre

(57) **Abrégé**

L'invention concerne un turbomoteur (10), notamment pour un hélicoptère, comportant un générateur de gaz (12) et une turbine libre (14) entraînée en rotation par un flux de gaz (F) généré par le générateur de gaz.

L'invention se caractérise par le fait que le turbomoteur comporte en outre des moyens de chauffage (26) disposés entre le générateur de gaz et la turbine libre (14), lesdits moyens de chauffage (26) étant aptes à augmenter la température du flux de gaz (f) généré par le générateur de gaz- (12) et entraînant la turbine libre.

## Description

La présente invention concerne le domaine des turbines à gaz et notamment celui des turbomoteurs pour des engins volants tels des hélicoptères.

La présente invention concerne plus particulièrement un turbomoteur, notamment pour un hélicoptère, comportant un générateur de gaz et une turbine libre entraînée en rotation par le flux de gaz généré par le générateur de gaz, le turbomoteur comportant en outre une veine reliant une sortie du générateur de gaz à une entrée de la turbine libre, à travers laquelle circule le flux de gaz généré par le générateur de gaz.

Traditionnellement, le générateur de gaz comporte au moins un compresseur et une turbine haute pression couplés en rotation par l'intermédiaire d'un arbre, appelé arbre du générateur de gaz. Le principe de fonctionnement est le suivant : l'air frais entrant dans le turbomoteur est comprimé du fait de la rotation du compresseur avant d'être envoyé vers une chambre de combustion où il est mélangé à un carburant. Les gaz brûlés du fait de la combustion sont ensuite évacués à grande vitesse.

Il se produit alors une première détente dans la turbine du générateur de gaz, durant laquelle cette dernière extrait l'énergie nécessaire à l'entraînement du compresseur.

La turbine du générateur de gaz n'absorbe pas toute l'énergie des gaz brûlés et l'excédent d'énergie correspond au flux de gaz généré par le générateur de gaz.

Ce dernier fournit donc de l'énergie à la turbine libre de sorte qu'il se produit une seconde détente dans la turbine libre qui transforme cette énergie en énergie mécanique afin d'entraîner un organe récepteur, tel le rotor de l'hélicoptère.

Ainsi, lors d'une phase d'accélération normale du turbomoteur, notamment en vol, le pilote exprime un besoin de puissance qui entraîne une augmentation du débit de carburant injecté dans la chambre de combustion, ce qui a pour effet d'augmenter l'énergie du flux de gaz généré et, par voie de conséquence, la puissance de la turbine libre.

Bien évidemment, le turbomoteur est prévu pour fonctionner dans des limites prescrites, notamment à une puissance nominale, le maintien du turbomoteur dans de telles limites étant effectué en agissant notamment sur le débit de carburant injecté dans la chambre de combustion.

Cependant, dans certaines circonstances, il est nécessaire de faire fonctionner le turbomoteur au-delà de sa puissance nominale pendant un certain temps.

Il est en effet connu que les moteurs d'un hélicoptère biturbines doivent être capable de fournir à l'hélicoptère la puissance nécessaire pour atterrir ou poursuivre son vol, au moins pendant un certain temps, alors que l'un des deux turbomoteurs a cessé de fonctionner, par exemple en raison d'une panne.

Autrement dit, dans ce régime de fonctionnement, communément appelé OEI (One Engine Inoperative), le turbomoteur restant en fonctionnement doit être apte à délivrer une puissance supplémentaire sensiblement supérieure à sa puissance nominale.

Traditionnellement, lors d'un régime OEI, le pilote augmente sensiblement le débit de carburant injecté dans la chambre de combustion du générateur de gaz, ce qui a pour conséquence d'augmenter la vitesse de rotation de l'arbre du générateur de gaz ainsi que la température dans la turbine haute pression.

L'augmentation de vitesse et de température entraîne une augmentation des contraintes mécaniques au niveau des pales de la turbine haute pression.

En raison de l'augmentation de la température dans la turbine haute pression, et donc de la température ressentie par les aubes, ces dernières subissent, lors des régimes OEI, des déformations mécaniques pouvant entraîner leur rupture.

L'activation d'un régime OEI oblige donc à remplacer plus souvent les pièces constitutives du turbomoteur.

Aussi et surtout, le besoin d'un régime OEI entraîne classiquement un surdimensionnement du moteur qui impose un surplus de consommation en carburant lors de l'utilisation des régimes normaux

Un but de la présente invention est de proposer un turbomoteur, notamment pour hélicoptère, apte à fournir une puissance sensiblement supérieure à sa puissance nominale sans imposer un surdimensionneemnt du moteur.

L'invention atteint son but par le fait que le turbomoteur selon la présente invention comporte en outre des moyens de chauffage disposés entre le générateur de gaz et la turbine libre, lesdits moyens de chauffage étant aptes à augmenter la température du flux de gaz généré par le générateur de gaz et entraînant la turbine libre qui s'écoule dans ladite veine, lesdits moyens de chauffage comprenant une chambre de combustion reliée à la veine par un passage amont de manière à pouvoir être alimentée par une fraction du flux de gaz généré par le générateur de gaz, la chambre de combustion étant en outre reliée à la veine par un passage aval de manière à pouvoir injecter un courant de gaz chaud dans la veine.

Selon l'invention, la fraction de flux qui alimente la chambre de combustion est strictement inférieure au flux de gaz généré par le générateur de gaz.

Grâce à l'invention, le turbomoteur peut fournir une puissance sensiblement supérieure à sa puissance nominale, par exemple mais non nécessairement lors d'un régime OEI.

De préférence, les moyens de chauffage, lorsqu'ils sont activés, n'augmentent pas sensiblement la vitesse des gaz sortant du générateur de gaz.

Dans le cas particulier d'un régime OEI, la puissance délivrée par le moteur sera appelée ci-après « puissance OEI ».

Les inventeurs ont en effet constaté que l'apport d'énergie calorique au flux de gaz entrant dans la turbine libre, notamment en augmentant la température du flux de gaz sortant du générateur de gaz, de préférence mais non nécessairement sans modifier sensiblement le cycle thermodynamique du générateur de gaz, se traduit par une augmentation de la puissance délivrée par le turbomoteur.

Selon une variante, le turbomoteur comprend des moyens pour faire varier la fraction de flux amenée vers la chambre de combustion.

Autrement dit, le turbomoteur selon l'invention peut fournir une puissance OEI sans qu'il soit nécessaire d'augmenter la vitesse de rotation de l'arbre du générateur de gaz.

Ainsi, par rapport à un turbomoteur traditionnel fonctionnant en régime OEI, la turbine haute pression du turbomoteur selon l'invention tourne moins vite et s'échauffe moins.

On comprend dès lors que, grâce à l'invention, les aubes de la roue de turbine haute pression s'endommagent moins vite que dans un turbomoteur traditionnel.

Aussi, la présente invention permet de réduire la taille du générateur de gaz et donc la consommation de carburant pour les régimes nominaux.

Naturellement, la chambre de combustion se distingue de la chambre de combustion du générateur de gaz, si bien que dans la suite de la description, toute référence à « chambre de combustion », sans précision supplémentaire, devra se comprendre comme correspondant à celle des moyens de chauffage conformes à l'invention. Le cas échéant, on parlera de « chambre de combustion du générateur de gaz ».

On comprend donc que lors de l'activation du régime OEI, la chambre de combustion est activée et fournit de l'énergie calorique au flux de gaz généré par le générateur de gaz grâce à quoi sa température augmente.

Un intérêt d'utiliser une chambre de combustion est la disponibilité de carburant, déjà nécessaire au fonctionnement du générateur de gaz.

Par ailleurs, la chambre de combustion permet de fournir très rapidement de l'énergie calorique au flux de gaz généré par le générateur de gaz, ce qui constitue un gage de sécurité lors de l'activation du régime OEI.

De plus, grâce au passage amont, on prélève une fraction du flux de gaz généré par le générateur de gaz, cette fraction de flux étant ensuite mélangée à du carburant puis brûlée dans la chambre de combustion. La combustion produit un courant de gaz chaud qui est évidemment plus chaud que le flux de gaz généré par le générateur de gaz, ce courant de gaz chaud étant ensuite réinjecté dans la veine, de préférence par l'intermédiaire du passage aval, où il se mélange avec le flux de gaz généré par le générateur de gaz, à la suite de quoi la température du flux de gaz qui alimente la turbine libre est augmentée.

Cette augmentation de température se fait donc sans trop perturber le flux de gaz entrant dans l'étage turbine libre.

Comme déjà indiqué, selon l'invention, la fraction du flux de gaz est sensiblement inférieure au flux total de gaz généré par le générateur de gaz. Autrement dit, la totalité du flux de gaz sortant du générateur de gaz n'entre pas dans la chambre de combustion.

Un autre avantage de l'invention est qu'elle permet de dimensionner le générateur de gaz d'une façon indépendante des contraintes imposées par les régimes d'urgence spécifiques aux applications aéronautiques multimoteur.

Un intérêt supplémentaire est de fournir un couple additionnel transitoire à la turbine libre lors de phases transitoires afin de limiter la baisse de vitesse de rotation du rotor. Ce principe s'applique à tous types de turbomoteurs.

L'invention sera mieux comprise et ses avantages apparaîtront mieux à la lecture de la description qui suit, d'un mode de réalisation indiqué à titre d'exemple non limitatif. La description se réfère au dessin annexé sur lequel :

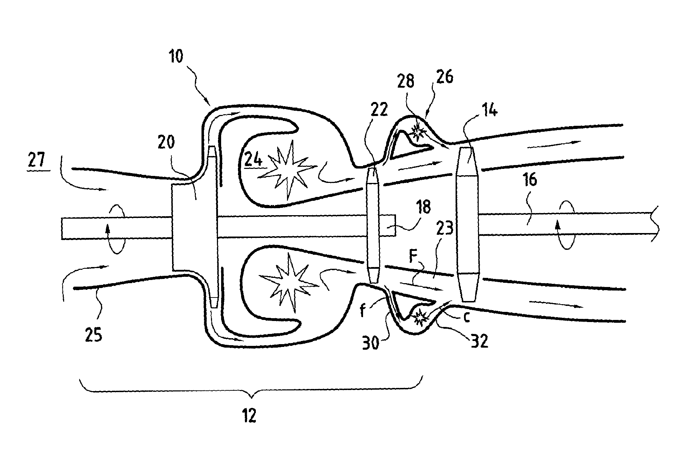

- la figure **1** représente un turbomoteur d'hélicoptère selon le premier mode de réalisation de l'invention muni de moyens de chauffage, comportant une chambre de combustion disposée entre le générateur de gaz et la turbine libre.

La figure **1** est une vue latérale en coupe d'un turbomoteur **10** conforme à un premier mode de réalisation de l'invention, destiné notamment à entraîner en rotation un rotor d'un hélicoptère (non représenté ici), le turbomoteur **10** comportant un générateur de gaz **12** et une turbine libre **14** apte à être entraînée en rotation par un flux de gaz **F** généré par le générateur de gaz **12.**

La turbine libre **14** est montée sur un arbre **16** qui transmet le mouvement de rotation à un organe récepteur tel un rotor principal de l'hélicoptère.

Le turbomoteur **10** représenté sur la figure **1** est du type à prise de mouvement arrière. On pourrait très bien considérer, sans sortir du cadre de la présente invention, un turbomoteur turbine libre du type à prise de mouvement avant avec renvoi par arbre extérieur ou bien un turbomoteur turbine libre du type à prise de mouvement avant avec renvoi par arbre coaxial.

Le générateur de gaz comporte un arbre rotatif **18,** appelé arbre de générateur de gaz, sur lequel sont montés un compresseur centrifuge **20** et une turbine haute pression **22,** ainsi qu'une chambre de combustion **24** disposée axialement entre le compresseur **20** et la turbine dès lors que l'on considère le générateur de gaz **12** selon la direction axiale de l'arbre rotatif **18.**

Le turbomoteur **10** présente un carter **25** muni d'une entrée d'air **27** par laquelle entre l'air frais dans le générateur de gaz **12.**

Après son admission dans l'enceinte du générateur de gaz **12,** l'air frais est comprimé par le compresseur **20** qui le refoule vers l'entrée de la chambre de combustion **24** dans laquelle il est mélangé avec du carburant.

La combustion qui a lieu dans la chambre de combustion **24** provoque l'évacuation des gaz brûlés vers la turbine haute pression **22,** ce qui a pour effet d'entraîner en rotation l'arbre **18** du générateur de gaz **12** et, par conséquent, le compresseur **20.**

La vitesse de rotation de l'arbre **18** du générateur de gaz **12** est déterminée par le débit de carburant entrant dans la chambre de combustion **24.**

Malgré l'extraction d'énergie par la turbine haute pression **22,** le flux de gaz **F** généré par le générateur de gaz présente une énergie résiduelle significative.

Comme on le comprend à l'aide de la figure **1**, le flux de gaz **F** s'écoule au travers d'une veine **23,** reliant une sortie du générateur de gaz **12** à une entrée de la turbine libre **14,** ce qui a pour effet de provoquer une détente dans la turbine libre **14** conduisant à la mise en rotation de la roue de la turbine libre et par suite à celle de l'arbre **16.**

Conformément à l'invention, le turbomoteur selon l'invention comporte des moyens de chauffage **26** qui, selon le premier mode de réalisation, comprennent une chambre de combustion additionnelle **28,** distincte de la chambre de combustion **24** du générateur de gaz. Comme on le voit sur la figure **1**, la chambre de combustion additionnelle **28** est disposée entre le générateur de gaz **12** et la turbine libre **14** et, plus précisément entre une sortie de la turbine haute pression **22** et une entrée de la turbine libre **14.** Il pourra par exemple être utilisé une chambre de combustion à géométrie torique encerclant la veine **23.**

Ci-après, la chambre de combustion additionnelle **28** sera simplement appelée « chambre de combustion », tandis que l'autre sera appelée « chambre de combustion du générateur de gaz ».

Comme on le comprend à l'aide de la figure **1**, la chambre de combustion **28** est apte à augmenter la température du flux de gaz généré par le générateur de gaz **12** avant son entrée dans la turbine libre **14.**

Pour ce faire, la chambre de combustion **28** est reliée à la veine **23** par l'intermédiaire d'un passage amont **30** de manière qu'une fraction **f** du flux de gaz sortant du générateur de gaz **12** puisse être prélevé et amené dans la chambre de combustion **28** pour y être mélangé avec du carburant. Au sens de l'invention, cette fraction **f** du flux de gaz est strictement inférieure au flux total **F** sortant du générateur de gaz.

La combustion de ce mélange dans la chambre de combustion **28** produit un courant de gaz chaud **C,** dont la température est sensiblement supérieure à celle du flux de gaz **F** généré par le générateur de gaz **12.**

Comme on le voit sur la figure **1**, le courant de gaz chaud est réinjecté dans la veine par l'intermédiaire d'un passage aval **32** où il se mélange avec la part du flux de gaz **F** qui n'a pas été prélevée. Comme la température du courant de gaz chaud **C** est sensiblement supérieure à celle de la part du flux non prélevée, on comprend que le mélange conduit à une augmentation de la température du flux de gaz s'écoulant dans la veine **23** juste avant son entrée dans la turbine libre **14.**

Comme on l'a déjà mentionné ci-dessus, les inventeurs ont découvert que cette augmentation de température entraîne une augmentation avantageuse de la puissance délivrée par le turbomoteur alors que la vitesse de rotation de l'arbre **18** du générateur de gaz **12** est avantageusement maintenue à sa vitesse de rotation nominale.

En l'espèce, on s'arrange pour que l'augmentation de la température en entrée de la turbine libre **14** soit comprise entre 50 et 200°K, de préférence entre 80 et 150°K. Pour cette plage de température, il a été constaté que le turbomoteur pouvait atteindre une puissance OEI similaire à celle d'un turbomoteur traditionnel sans augmenter la vitesse de rotation de l'arbre **18** du générateur de gaz.

Par rapport à un turbomoteur non équipé des moyens de chauffage, par exemple l'ARRIEL 2C2 de la demanderesse, des analyses ont permis de constater que grâce à l'invention, lors d'un régime OEI sur 30 secondes, pour lequel la puissance OEI fournie est environ 20% supérieure à la puissance nominale du turbomoteur, le gain en température de la turbine haute pression est d'environ 80°K tandis que le gain en vitesse de rotation de l'arbre du générateur de gaz est d'environ 8%.

Autrement dit, lors d'un régime OEI, la turbine haute pression du turbomoteur selon l'invention tourne moins vite et s'échauffe moins que celle d'un turbomoteur non équipé des moyens de chauffage.

Evidemment, les pièces constitutives de la turbine libre **14** devront être dimensionnées de manière à supporter l'augmentation de température.

Un autre intérêt de l'invention est de pouvoir diminuer la masse du turbomoteur

Encore un intérêt de la présente invention, déjà mentionné, est de pouvoir réduire la consommation en carburant du turbomoteur **10.**

Un autre intérêt est de pouvoir offrir un turbomoteur **10** offrant une puissance OEI supérieure à celle du turbomoteur traditionnel équivalent.

Sans sortir du cadre de l'invention, il est possible d'activer la chambre de combustion **28** hors régime OEI, par exemple pour fournir temporairement un surplus de puissance au rotor.

## Revendications

1. Turbomoteur **(10),** notamment pour un hélicoptère, comportant un générateur de gaz **(12)** et une turbine libre **(14)** entraînée en rotation par un flux de gaz (F) généré par le générateur de gaz, le turbomoteur comportant en outre une veine **(23)** reliant une sortie du générateur de gaz à une entrée de la turbine libre, à travers laquelle circule le flux de gaz généré par le générateur de gaz, le turbomoteur étant **caractérisé en ce qu'**il comporte en outre, des moyens de chauffage **(26)** disposés entre le générateur de gaz et la turbine libre, lesdits moyens de chauffage étant aptes à augmenter la température du flux de gaz entraînant la turbine libre qui s'écoule dans ladite veine, lesdits moyens de chauffage comprenant une chambre de combustion reliée à la veine par un passage amont **(30)** de manière à pouvoir être alimentée par une fraction (f) du flux de gaz (F) généré par le générateur de gaz **(12),** la chambre de combustion **(28)** étant en outre reliée à la veine **(23)** par un passage aval **(32)** de manière à pouvoir injecter un courant de gaz chaud (C) dans la veine.

2. Turbomoteur selon la revendication 1, **caractérisé en ce que** ladite augmentation de température est comprise entre 50 et 200°K.

3. Turbomoteur selon la revendication 1 ou 2, **caractérisé en ce que** la chambre de combustion **(28)** encercle la veine **(23).**
